# FASCICULE DE BREVET EUROPEEN

(11) **EP 2 944 831 B1**
(45) Date de publication et mention de la délivrance du brevet: **16.11.2016**
(21) Numéro de dépôt: 15165271.6
(22) Date de dépôt: 27.04.2015
(51) Int. Cl.: F16B 5/06, E05C 19/16, H01F 7/02

(54) **DISPOSITIF DE FIXATION POUR FIXER UN PANNEAU À UNE STRUCTURE, ET AÉRONEF**
BEFESTIGUNGSVORRICHTUNG ZUM BEFESTIGEN EINES PANEELS AN EINE STRUKTUR, UND LUFTFAHRZEUG
A FASTENER DEVICE FOR FASTENING A PANEL TO A STRUCTURE, AND AN AIRCRAFT

(30) Priorité: 12.05.2014 FR 1401060
(43) Date de publication de la demande: 18.11.2015
(73) Titulaire: Airbus Helicopters, 13725 Marignane Cedex (FR)
(72) Inventeur: Giacalone, Jean-Michel, 13320 Bouc Bel Air (FR); Peyrusaubes, Clément, 13090 Aix en Provence (FR); Denavaux, Marc, 83860 Nans-les-Pins (FR)
(74) Mandataire: GPI & Associés

(56) Documents cités:
- DE-U1-202004 001 958
- GB-A- 1 056 797
- US-A1- 2002 197 107

## Description

La présente invention concerne un dispositif de fixation d'un panneau et notamment d'un panneau d'habillage d'un habitacle, et un aéronef muni de ce dispositif.

Un aéronef comporte usuellement des panneaux recouvrant les parois d'un habitacle. Dès lors, de tels panneaux sont communément dénommés « panneaux d'habillage ».

Les panneaux sont fixés aux structures délimitant l'habitable par des dispositifs dénommés « dispositif de fixation » par commodité.

Un dispositif de fixation connu comprend des moyens de vissage. Chaque panneau est alors directement vissé à une structure.

Un tel dispositif de fixation à visseries présente l'avantage d'être fiable et peu onéreux.

Toutefois, ce dispositif de fixation est par essence visible, ce qui peut être gênant d'un point de vue esthétique sur certains aéronefs.

De plus, ce dispositif de fixation peut offrir de faibles tolérances de montage, et peut donc conduire à des difficultés d'assemblage.

En outre, un aéronef peut être sujet à des vibrations. Un dispositif de fixation à visseries s'avère faiblement amortissant en termes de vibrations.

D'autres dispositifs de fixation peuvent mettre en oeuvre des broches à billes ou des pions et des réceptacles interposés entre le panneau et la structure.

Ces dispositifs de fixation sont alors peu visibles voire invisibles, et offrent des tolérances de montage intéressantes.

Toutefois, ces dispositifs de fixation peuvent être onéreux, et faiblement amortissants en termes de vibrations.

Par ailleurs, un aéronef doit répondre à des règlements de certification en termes de tenue au crash. La justification de la tenue au crash de ces dispositifs de fixation peut s'avérer délicate.

Par suite, la mise en oeuvre d'un dispositif de fixation d'un panneau sur un aéronef conduit à des difficultés spécifiques en termes de vibrations et de tenue au crash notamment. L'invention se situe donc particulièrement dans ce domaine technique.

Dès lors, un dispositif de fixation d'un panneau d'un aéronef peut comporter au moins un des avantages suivants : être le moins visible possible, tolérant à l'assemblage, léger, peu onéreux, fiable, amortissant, compatible avec les règlements de certification en termes de tenue au crash.

Le document US 2002/197107 décrit un dispositif de fixation pour fixer un panneau décoratif à une automobile. Ce document ne fait donc pas référence aux problèmes spécifiques d'un aéronef.

Le dispositif de fixation est muni d'une base reliée à un plateau porteur. Le plateau porteur supporte un moyen de fixation qui peut être magnétique.

Le document WO 2009/108.461 concerne une fixation magnétique munie d'un support. Un ensemble magnétique annulaire portant un aimant est alors emmanché autour d'un pion du support et d'un aimant.

Le support est alors fixé à un organe pour lier cet organe à une plaque métallique via l'aimant.

Ce dispositif est intéressant. Toutefois, l'agencement d'un panneau d'habillage contre une structure d'aéronef peut générer des contraintes de positionnement tel qu'un désalignement du panneau par rapport à la structure.

En outre, un aimant est susceptible de se dégrader lorsque l'aimant rentre en contact « violemment » contre un autre aimant ou une plaque métallique. En effet, un aimant est relativement peu résistant à un choc.

La tenue au crash d'un aimant peut aussi être délicate à obtenir.

Le document US 5.280.991 décrit un dispositif de fixation magnétique d'un panneau de toit d'un véhicule. Ce dispositif de fixation comporte des aimants incorporés sur une périphérie du panneau.

Le document US 7.178.207 décrit un dispositif de fixation magnétique ayant deux aimants.

On connait aussi les documents GB 1.056.797 A et DE 20.2004.001958 U1.

Le document GB 1.056.797 A montre un dispositif de fixation avec les caractéristiques du préambule de la revendication 1.

La présente invention a alors pour objet de proposer un dispositif de fixation visant à présenter au moins un des avantages suivants : être le moins visible possible, tolérant à l'assemblage, léger, peu onéreux, fiable, amortissant, compatible avec les règlements de certification en termes de tenue au crash.

L'invention vise donc un dispositif de fixation pour fixer un panneau à une structure, ce dispositif de fixation étant muni d'au moins un ensemble de fixation réversible comprenant un plot mobile apte à être fixé au panneau et un plot fixe apte à être fixé à la structure, le plot mobile comportant un premier moyen d'aimantation coopérant avec un deuxième moyen d'aimantation du plot fixe, au moins un moyen d'aimantation comportant un aimant.

Pour faciliter la lecture, on qualifie de « premier » un organe du plot mobile et de « deuxième » l'organe correspondant du plot fixe.

En outre, un moyen d'aimantation est porté par une rotule du plot associé, chaque moyen d'aimantation étant relié par un moyen de déplacement qui translate ce moyen d'aimantation d'une position d'engagement à une position de désengagement de manière réversible, un premier moyen de déplacement du plot mobile translatant dans un plan le premier moyen d'aimantation et un deuxième moyen de déplacement du plot fixe translatant le deuxième moyen d'aimantation le long d'un axe longitudinal du plot fixe sensiblement orthogonal audit plan, le premier et le deuxième moyens d'aimantation étant fortement aimantés l'un à l'autre lorsqu'ils sont en vis-à-vis et chacun dans la position d'engagement et n'étant pas aimantés ou faiblement aimantés lorsqu'au moins un moyen d'aimantation est dans sa position de désengagement.

Par exemple, le premier moyen d'aimantation est fixé directement au moyen de déplacement du plot mobile, le deuxième moyen d'aimantation étant porté par une rotule qui est fixée au moyen de déplacement. Eventuellement, chaque moyen d'aimantation est porté par une rotule.

En outre, l'axe longitudinal du plot mobile dit « premier axe longitudinal » est sensiblement parallèle à l'axe longitudinal du plot fixe dit « deuxième axe longitudinal ». Le plan dans lequel translate le premier moyen d'aimantation est alors sensiblement parallèle au panneau équipé du plot mobile.

On entend par « sensiblement orthogonal » que le deuxième axe longitudinal est orthogonal à ce plan lorsque le plot mobile et le plot fixe sont parfaitement positionnés et aimantés l'un à l'autre.

Dès lors, le moyen d'aimantation porté par une rotule possède par exemple, par rapport à un carter du plot associé, trois degrés de liberté en rotation conférés par la rotule. Ces degrés de liberté permettent d'autoriser un décalage entre le plot mobile et le plot fixe, par exemple un décalage angulaire, transversal et/ou en élévation.

Par suite, le dispositif de fixation offre une tolérance intéressante à l'assemblage. Cette caractéristique permet d'assouplir la précision du positionnement du panneau par rapport à la structure à habiller.

De plus, ces degrés de liberté en rotation tendent à réduire les risques de blocage du dispositif, suite à un arcboutement par exemple provoqué par la déformation du panneau d'habillage ou de la structure à habiller.

En outre, le plot mobile peut être accolé à une face interne du panneau en regard d'une face de cette structure. Il en résulte que le dispositif de fixation est relativement peu visible d'une cabine.

Par ailleurs, le dispositif de fixation peut être standardisé afin d'être utilisé pour la fixation de multiples panneaux distincts. Cette standardisation peut faciliter le travail d'un bureau d'étude réalisant un aménagement intérieur. De plus, la standardisation permet de faciliter la réalisation de plans d'interface entre les panneaux et les structures à habiller.

Par ailleurs, ce dispositif de fixation est simple à mettre en oeuvre et tend à limiter la détérioration de chaque aimant, par exemple un aimant néodynium de forte capacité

En effet, un opérateur peut manoeuvrer les dispositifs de déplacement pour positionner les moyens d'aimantation dans leur position de désengagement.

En effet, outre des degrés de liberté en rotation, chaque moyen d'aimantation présente un degré de liberté en translation. Plus précisément, le premier moyen d'aimantation présente un degré de liberté en translation dans un plan défini par un axe en élévation et un axe transversal. Par contre, le deuxième moyen d'aimantation présente un degré de liberté en translation le long d'un axe longitudinal.

Pour fixer le panneau à une structure, un opérateur peut alors induire le déplacement en translation du moyen d'aimantation du plot mobile dans la position de désengagement.

Par suite, l'opérateur positionne le moyen d'aimantation du plot fixe dans la position d'engagement.

L'opérateur pousse alors le panneau vers la structure en accolant sensiblement chaque plot mobile au plot fixe correspondant.

Le premier moyen d'aimantation de chaque plot mobile étant dans la position de désengagement, l'aimantation du premier moyen d'aimantation au deuxième moyen d'aimantation est faible voire nulle compte tenu de l'entrefer les séparant. En effet, le premier moyen d'aimantation est séparé du deuxième moyen d'aimantation d'une part selon une direction longitudinale sous l'effet du deuxième moyen de déplacement du plot fixe, et d'autre part selon une direction transversale ou en élévation sous l'effet du premier moyen de déplacement du plot mobile.

L'opérateur réduit alors cet entrefer à son minimum en induisant le déplacement du premier moyen d'aimantation de chaque plot mobile dans la position d'engagement. L'aimantation du premier moyen d'aimantation au deuxième moyen d'aimantation est alors élevée pour maintenir le panneau en position.

Le déplacement des moyens d'aimantation présente l'avantage notable d'éviter un choc « violent » entre les moyens d'aimantation. Lors d'un choc de ce type, les moyens d'aimantation « claquent » selon l'expression de l'homme du métier ce qui peut conduire à un écaillage des moyens d'aimantation et à une réduction de leur pouvoir d'attraction dans le cadre d'un aimant.

L'invention permet donc d'utiliser une technologie d'aimantation relativement peu onéreuse, de manière fiable dans le temps afin de fixer un panneau à une structure. Cette technologie permet un montage invisible, fiable, et tolérant dans la mesure où un moyen d'aimantation est agencé dans une rotule.

Pour écarter le panneau, l'opérateur déplace selon un plan parallèle au panneau le premier moyen d'aimantation de chaque plot mobile dans la position de désengagement. La force d'attraction mutuelle des moyens d'aimantation du plot mobile et du plot fixe d'un ensemble n'est alors plus suffisante pour empêcher un opérateur de déplacer le panneau par rapport à la structure.

Ce dispositif de fixation peut de plus comporter une ou plusieurs des caractéristiques additionnelles qui suivent.

Ainsi, le dispositif de fixation peut comporter au moins une articulation à pivot apte à être fixée au panneau et à la structure pour autoriser une rotation du panneau par rapport à la structure.

Par exemple, chaque articulation à pivot est agencée dans une partie inférieure d'un panneau alors qu'un plot mobile est fixé dans une partie supérieure du panneau.

Un opérateur fixe alors le panneau à l'articulation à pivot, puis pivote le panneau pour le fixer à la structure. Cette articulation à pivot facilite le positionnement du panneau par rapport à la structure.

En outre, chaque moyen d'aimantation d'un ensemble de fixation comporte un aimant, soit un moyen d'aimantation comporte un aimant et l'autre moyen d'aimantation comporte une plaque métallique.

Le premier moyen d'aimantation et le deuxième moyen d'aimantation peuvent donc tout deux comprendre des aimants.

Cependant, si la force d'attraction est très élevée, un seul moyen d'aimantation peut être muni d'un aimant. Par exemple, le premier moyen d'aimantation peut comporter un aimant, alors que le deuxième moyen d'aimantation d'un ensemble de fixation comporte une plaque apte à être aimantée audit aimant.

Par ailleurs, au moins un moyen d'aimantation comportant une face dite « face de liaison » à aimanter à l'autre moyen d'aimantation, cette face de liaison est éventuellement recouverte d'un organe antifriction.

Par exemple une pastille de téflon® est collée sur la face de liaison d'un moyen d'aimantation de type aimant.

Cette caractéristique est notamment intéressante dans un milieu soumis à des vibrations pour éviter que ces vibrations n'érodent les moyens d'aimantation, et le cas échéant leur couche de protection nickelée.

Par ailleurs, le plot fixe peut comporter un moyen de déplacement dit « deuxième moyen de déplacement » muni d'un bras, ce bras portant le deuxième moyen d'aimantation de ce plot fixe et comprenant une vis sans fin engagée dans un écrou attaché à un carter du plot fixe, le deuxième moyen de déplacement étant pourvu d'un moyen d'entraînement pour mettre en rotation le bras afin d'induire la translation ce bras.

L'écrou étant solidaire du carter du plot fixe, une rotation de la vis sans fin induit de fait un déplacement longitudinal du bras, de la rotule et du deuxième moyen d'aimantation du plot.

Ce système est relativement simple et potentiellement peu onéreux.

En outre, le bras peut s'étendre longitudinalement d'une extrémité portant le deuxième moyen d'aimantation, le cas échéant via une rotule, vers une extrémité munie d'une base crantée, le moyen d'entraînement comportant une crémaillère mobile transversalement, une périphérie de ladite base étant au moins partiellement crantée en comportant au moins un cran en prise avec la crémaillère.

Par suite, une translation de la crémaillère induit une rotation de la base crantée selon le principe de fonctionnement d'une came. Cette rotation induit alors la translation de la vis sans fin et donc une translation du deuxième moyen d'aimantation le long d'un axe longitudinal.

Par ailleurs, le premier moyen d'aimantation du plot mobile est porté par un berceau non magnétique solidaire du premier moyen de déplacement, ce berceau étant mobile en translation selon une direction dans un plan.

Ce berceau peut comporter une section plane non magnétique suivie d'une section évidée accueillant le premier moyen d'aimantation, la section plane étant en vis-à-vis du deuxième moyen d'aimantation dans la position de désengagement, le premier moyen d'aimantation étant en vis à vis du deuxième moyen d'aimantation dans la position d'engagement.

En outre, le premier moyen de déplacement du plot mobile comporte éventuellement un arbre longitudinal portant un guide perpendiculaire à l'arbre longitudinal, cet arbre longitudinal étant solidaire du berceau et d'un moyen d'entraînement apte à requérir la translation du berceau dans ledit plan, ce guide étant monté coulissant sur un carter du plot mobile

Le moyen d'entraînement du plot mobile peut comporter un câble de commande. Le moyen d'entraînement du plot mobile peut aussi être commandé par un système électrique par exemple

La conception des plots mobiles permet d'utiliser une seule commande à câble pour activer simultanément plusieurs plots mobiles. Ainsi, le dispositif de fixation peut inclure une pluralité d'ensembles de fixation incluant chacun un plot mobile et un plot fixe, les crémaillères de plusieurs plots mobiles étant reliées à une même commande à câble.

Le chainage obtenu entre les plots mobiles permet de simplifier la commande du panneau lorsque plusieurs plots mobiles sont utilisés, et aussi de réduire la masse du système de commande.

Par ailleurs, le dispositif de fixation peut comporter un système de tenue au crash muni d'un lien de sécurité enroulé autour d'un enrouleur autobloquant dudit plot mobile, ledit lien de sécurité portant une broche à billes insérable de manière réversible et manuelle dans un réceptacle dudit plot fixe. Ce réceptacle peut être solidaire d'un carter du plot fixe.

Chaque ou au moins un ensemble de fixation peut comprendre un système de tenue au crash mettant en oeuvre un lien de sécurité s'étendant entre le plot mobile et le plot fixe.

Cette architecture permet de séparer la fonction « maintien du panneau aux cas de charges opérationnels » remplie à l'aide des moyens d'aimantation pour supporter des efforts faibles, et la fonction « maintien du panneau aux cas de charges crashs » remplie à l'aide du système de tenue au crash pour supporter des efforts élevés.

En parallèle des moyens d'aimantation, un système de retenue par filin permet de résister aux efforts liés au crash. Le lien de sécurité représente en effet un filin monté sur un enrouleur autobloquant qui permet de minimiser la course du panneau par rapport à la structure en cas de crash

De plus, ce lien de sécurité autorise le maintien du panneau dans une position semi-ouverte pour des activités de maintenance.

Ce lien de sécurité est dimensionné pour supporter un effort relativement élevé comparé à sa masse. Ce dimensionnement est relativement simple à réaliser.

En effet, les efforts exercés sur le dispositif de fixation lors d'un crash peuvent tendre à séparer le premier moyen d'aimantation et le deuxième moyen d'aimantation d'un ensemble jusqu'à une position ouverte atteinte lorsque le lien de sécurité est tendu.

Selon un premier mode de réalisation, l'enrouleur est par exemple mobile en translation selon un axe longitudinal du plot mobile, orthogonal audit plan dans lequel translate le premier moyen d'aimantation, en étant agencé autour d'un moyen de guidage d'un carter du plot mobile, cet enrouleur étant accolé par un organe ressort contre le premier moyen de déplacement pour être solidaire en translation du moyen d'aimantation du plot mobile.

L'enrouleur peut comporter un plan incliné accolé par l'organe ressort contre une face inclinée du premier moyen de déplacement, une translation du premier moyen de déplacement dans un plan engendrant une translation dudit enrouleur selon un axe longitudinal perpendiculaire audit plan.

De plus, ce carter peut comporter au moins un cran coopérant avec la face crantée de l'enrouleur pour empêcher une rotation de l'enrouleur selon un sens de rotation d'évidement permettant l'évidement du lien de sécurité, lorsque le moyen d'aimantation est dans sa position d'engagement.

Lors du verrouillage du panneau, le premier moyen d'aimantation et l'enrouleur sont dans leur position d'engagement. La face crantée de l'enrouleur est alors en prise sur au moins un cran du carter. Ce cran interdit alors une rotation de l'enrouleur tendant à dévider le lien de sécurité. La longueur du lien de sécurité entre le plot mobile et le plot fixe est ainsi fixe dans cette position d'engagement.

Par contre, dans la position de désengagement, il est possible de dérouler le lien de sécurité, l'enrouleur n'étant pas solidaire en rotation du moyen d'aimantation. Cette caractéristique permet la réalisation d'actions de maintenance.

Par suite, l'enrouleur est finalement bloqué en rotation, sauf lorsqu'une action volontaire induit le déplacement du premier moyen d'aimantation du plot mobile vers le centre du premier carter du plot mobile. Lors de cette action volontaire, le lien de sécurité de sécurité peut être déroulé, notamment pour pouvoir emmancher la broche à billes dans le réceptacle dédié du plot fixe. Par contre en cas de crash, l'enrouleur est bloqué par des dents de crabot du premier carter pour retenir le panneau, en cas de séparation des moyens d'aimantation.

Selon un deuxième mode de réalisation, l'enrouleur est fixé au carter du plot mobile par une articulation conférant à l'enrouleur un degré de liberté en rotation par rapport au carter du plot mobile. L'enrouleur n'est donc pas mobile en translation au sein du plot mobile.

Cet enrouleur comprend un anneau cranté, let premier moyen de déplacement du plot mobile comportant un cran bloquant l'anneau cranté pour immobiliser en rotation l'enrouleur lorsque le moyen d'aimantation est dans sa position d'engagement. Ce cran interdit alors une rotation de l'enrouleur tendant à dévider le lien de sécurité.

A l'inverse, dans la position de désengagement, l'enrouleur n'est plus en prise sur le premier moyen de déplacement, ce qui permet de manipuler le lien de sécurité.

Un organe élastique peut être interposé entre le premier moyen de déplacement et le carter du plot fixe pour tendre à positionner le cran du premier moyen de déplacement contre l'anneau cranté.

En outre, ledit réceptacle peut être traversé par un doigt d'une crémaillère en prise sur le deuxième moyen de déplacement du plot fixe en l'absence de la broche à billes, le moyen d'aimantation du plot fixe étant dans la position de désengagement en l'absence de la broche à billes.

Cette caractéristique oblige un opérateur à fixer la broche à billes d'un plot mobile à un plot fixe pour pouvoir solidariser le plot mobile au plot fixe. La sécurité du dispositif de fixation est ainsi optimisée.

Par ailleurs, l'enrouleur peut comporter un ressort de rappel tendant à engendrer une rotation de l'enrouleur selon un sens de rotation d'enroulement pour enrouler le lien de sécurité autour de l'enrouleur.

Lors de la fermeture du panneau, le lien de sécurité se rembobine automatiquement grâce au ressort de rappel de l'enrouleur.

Préalablement à la fixation du panneau à une structure, le deuxième moyen d'aimantation est en retrait au sein du plot fixe, à savoir dans sa position de désengagement. De même, le premier moyen d'aimantation est décalé transversalement ou en élévation par rapport au deuxième moyen d'aimantation, à savoir dans sa position de désengagement.

L'opérateur positionne alors le panneau par rapport à la structure, par exemple en le faisant pivoter par le biais d'une articulation à pivot.

L'opérateur insère alors la broche à billes dans le réceptacle du plot fixe. Cette insertion induit le déplacement de la deuxième crémaillère et par suite la translation du deuxième moyen d'aimantation vers l'extérieur du plot fixe et donc vers le plot mobile.

Cette opération est possible car l'enrouleur n'est alors plus en prise avec des crans du carter du plot mobile ou du moyen de déplacement de ce plot mobile selon la réalisation. Dès lors, l'opérateur peut tirer sur le lien de sécurité pour le dérouler et enficher la broche à billes dans le plot fixe.

L'opérateur déplace alors le panneau pour rapprocher le plot mobile du plot fixe. Le premier moyen d'aimantation étant décalé transversalement ou en élévation, le premier moyen d'aimantation n'entre pas en contact avec le deuxième moyen d'aimantation ce qui peut éviter un « claquage » de ou des aimants.

L'opérateur déplace ensuite le premier moyen d'aimantation en le rapprochant du deuxième moyen d'aimantation.

Ce déplacement transversal ou en élévation dans un plan induit aussi le blocage de l'enrouleur, suite à un déplacement de l'enrouleur vers les crans du premier carter ou un rapprochement de cran placé sur le premier moyen de déplacement contre un anneau cranté de l'enrouleur.

Lorsque le premier moyen d'aimantation atteint sa position d'engagement, ce premier moyen d'aimantation est fortement aimanté au deuxième moyen d'aimantation. De plus, l'enrouleur est immobilisé par au moins un cran du plot mobile.

Pour démonter le panneau, l'opérateur peut réaliser les étapes précédentes dans l'ordre inverse.

Par ailleurs, le dispositif de fixation peut comporter un organe en élastomère interposé par exemple entre un moyen d'aimantation d'un plot et un carter de ce plot, voire indirectement en étant interposé entre le moyen de déplacement et ledit carter.

Chaque plot concerné comporte un moyen amortissant des vibrations, à savoir l'organe en élastomère qui découple la rotule du carter.

Eventuellement, une molette filetée est utilisée pour précontraindre l'élastomère afin de modifier sa raideur pour l'adapter en fonction du système considéré. Cette molette permet de régler l'amortissement du moyen amortissant après des essais en vol, sans avoir à changer la définition du système.

Outre un dispositif de fixation, l'invention vise un aéronef muni d'une structure et d'au moins un panneau d'habillage. Cet aéronef comporte alors au moins un dispositif de fixation selon l'invention.

L'invention et ses avantages apparaîtront avec plus de détails dans le cadre de la description qui suit avec des exemples donnés à titre illustratif en référence aux figures annexées qui représentent :
- la figure 1, une coupe d'un aéronef muni d'un panneau fixé à une structure au travers d'un dispositif de fixation selon l'invention,
- la figure 2, une vue schématique d'un ensemble de fixation muni d'un plot mobile selon un premier mode de réalisation,
- la figure 3, une coupe d'un plot fixe montrant sa deuxième crémaillère,
- la figure 4, un plot mobile selon un premier mode de réalisation dans une position de désengagement obtenue en déplaçant la première crémaillère avec une commande à câble,
- les figures 5 à 8, des vues explicitant la solidarisation d'un plot mobile à un plot fixe,
- la figure 9 et la figure 12, des vues explicitant le fonctionnement en cas de crash notamment d'un dispositif de fixation muni d'un système de tenue au crash, et
- les figures 10 et 11, des vues présentant un deuxième mode de réalisation du plot mobile.

Les éléments présents dans plusieurs figures distinctes sont affectés d'une seule et même référence.

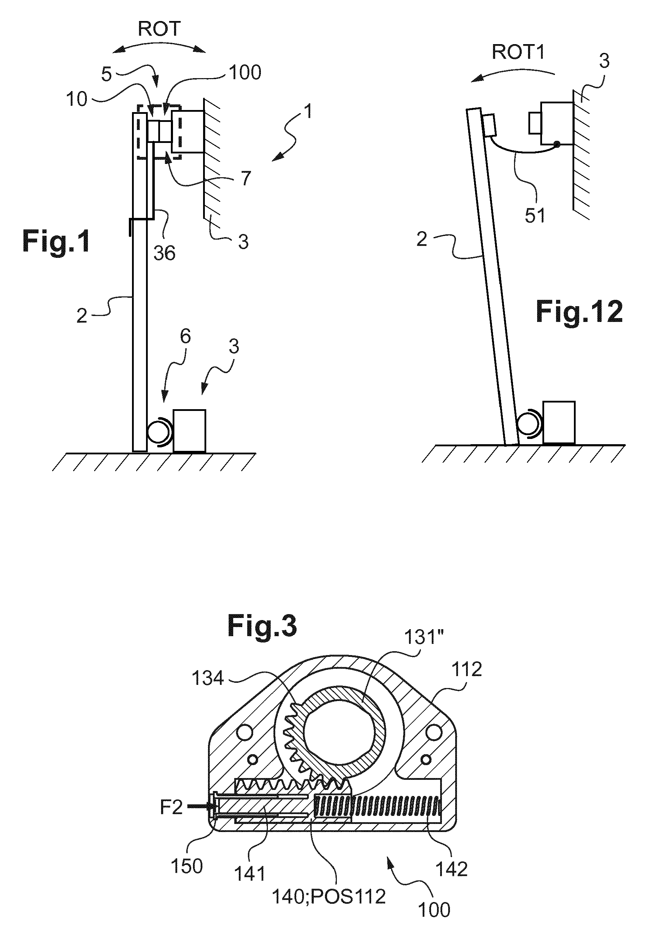

La figure 1 présente un aéronef 1 comprenant au moins un panneau 2 à fixer à une structure 3. Par exemple, un panneau 2 d'habillage doit être fixé à une structure délimitant au moins partiellement une cabine.

Dès lors, l'aéronef 1 est muni d'un dispositif de fixation 5.

Ce dispositif de fixation 5 comporte au moins un ensemble de fixation 7 pour fixer de façon réversible le panneau 2 à la structure 3. Un tel ensemble de fixation 7 inclut alors un plot mobile 10 fixé au panneau 2 ainsi qu'un plot fixe 100 fixé à la structure 3 par des moyens usuels.

Par ailleurs, le dispositif de fixation 5 présenté comporte au moins une articulation à pivot 6. Cette articulation à pivot 6 comprend une partie fixée à la structure 3 et une partie fixée au panneau 2 pour autoriser une rotation ROT du panneau 2 par rapport à la structure 3.

Par exemple, au moins un ensemble de fixation se trouve dans une section supérieure du panneau, alors qu'au moins une articulation à pivot est située au pied du panneau 2.

A titre de variante, le dispositif de fixation comporte une pluralité d'ensembles de fixation mais est dépourvu d'articulation à pivot.

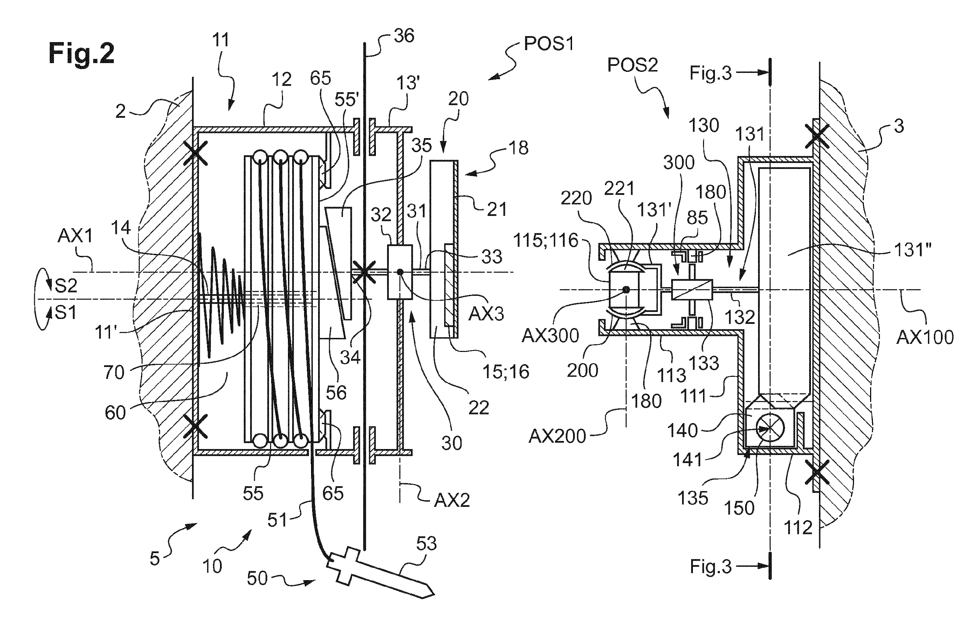

En référence à la figure 2, chaque plot comporte un moyen d'aimantation 15, 115 pour adhérer l'un à l'autre de manière réversible. Plus précisément, au moins un moyen d'aimantation comporte un aimant 16, l'autre moyen d'aimantation d'un ensemble de fixation 7 comportant soit un autre aimant soit une plaque métallique sensible à un champ magnétique.

En outre, chaque moyen d'aimantation présente une face de liaison destinée à être aimantée à l'autre moyen d'aimantation. Dès lors, au moins une face de liaison peut être recouverte d'un organe antifriction 18 usuel.

Par exemple, le moyen d'aimantation dit « premier moyen d'aimantation 15 » du plot mobile est un aimant 16 recouvert d'un organe antifriction 18. Le moyen d'aimantation dit «deuxième moyen d'aimantation 115 » du plot fixe inclut alors par exemple une plaque métallique 116.

Par ailleurs, chaque plot 10, 100 comporte un carter. Ce carter peut être décomposé en une partie arrière 12, 112 fixée soit au panneau soit à la structure 3 porteuse, et une partie avant 13, 113 en regard de l'autre partie avant.

Par suite, le plot mobile comporte un premier carter 11 muni d'une première partie arrière 12 fixée au panneau 2 et d'une première partie avant 13. Le plot fixe comporte un deuxième carter d'une deuxième partie avant 113 en regard de la première partie avant 13.

Au moins un plot comporte en outre une rotule 200 agencée dans la partie avant du plot. Cette rotule porte le moyen d'aimantation 115 associé pour lui laisser trois degrés de liberté en rotation autour d'un axe longitudinal AX100 du plot traversant le panneau et la structure, mais aussi autour d'un axe transversal AX300 et d'un axe en élévation AX200 sensiblement parallèle au panneau et à la structure.

Les axes longitudinaux AX1, AX100 des plots mobile 15 et fixe 115 d'un ensemble de fixation sont parallèles en l'absence de décalage indu. Cette absence est toutefois théorique. Dès lors, on verra par la suite que l'invention permet d'autoriser un tel décalage. Ces axes longitudinaux sont aussi perpendiculaires au panneau 2 et à la structure 3.

Dès lors, le deuxième moyen d'aimantation 115 du plot fixe est favorablement porté par une rotule 200.

Par ailleurs, chaque plot comporte un moyen de déplacement portant le moyen d'aimantation du plot pour conférer un degré de liberté en translation au moyen d'aimantation du plot. Plus précisément, chaque moyen d'aimantation peut être translaté par rapport au carter du plot d'une position d'engagement vers une position de désengagement.

Les moyens d'aimantation 15, 155 du plot mobile et du plot fixe sont fortement aimantés l'un à l'autre lorsqu'ils sont en vis-à-vis et chacun dans la position d'engagement POS1, et n'étant pas aimantés ou faiblement aimantés lorsqu'au moins un moyen d'aimantation 15, 115 est dans sa position de désengagement POS2. Dans la position d'engagement, un moyen d'aimantation saille longitudinalement du carter du plot associé.

Le moyen de déplacement dit « premier moyen de déplacement 30 » du plot mobile est favorablement solidaire d'un berceau 20 non magnétique.

Ce berceau 20 porte alors le premier moyen d'aimantation 15. A cet effet, le berceau 20 peut comporter successivement selon sa direction de translation une section plane 21 non magnétique qui est suivie d'une section évidée 22. Le premier moyen d'aimantation15 est alors logé dans la section évidée 22.

Cette géométrie permet de disposer le premier moyen d'aimantation 15 en vis à vis du deuxième moyen d'aimantation 115 lorsque le premier moyen d'aimantation est dans sa position d'engagement POS1 visible sur la figure 2. Par contre, la section plane 21 est en vis-à-vis du deuxième moyen d'aimantation 115 dans la position de désengagement POS2.

Dès lors, le premier moyen de déplacement 30 déplace le berceau 20 dans un plan parallèle au panneau 2 selon une direction. Cette direction peut être soit une direction en élévation conformément à la réalisation de la figure 2, soit une direction transversale.

A cet effet, le premier moyen de déplacement 30 comporte un arbre longitudinal 31. Cet arbre longitudinal 31 s'étend longitudinalement d'une première extrémité 33 solidaire du berceau 20 vers une deuxième extrémité 34. L'arbre longitudinale 31 porte alors un guide 32 entre sa première extrémité 33 et sa deuxième extrémité 34. Par suite, l'arbre longitudinal peut comprendre deux tronçons, chaque tronçon étant solidaire dudit guide 32.

Ce guide 32 s'étend perpendiculairement à l'arbre longitudinal, à savoir selon une direction en élévation suivant la figure 2. Ce guide 32 est en outre un guide creux coulissant sur une tige de la partie avant 13 du premier carter 11.

En outre, ledit arbre longitudinal 31 est solidaire d'un moyen d'entraînement 36 apte à requérir la translation du guide le long de cette tige. Un tel moyen d'entraînement du plot mobile comporte par exemple un câble de commande 36.

Le moyen de déplacement dit deuxième moyen de déplacement 300 du plot fixe peut comporter un bras 131 portant la rotule 200 du plot fixe. Par exemple, le bras porte une cage externe 220 de la rotule dans laquelle une bille 221 tronquée portant le deuxième moyen d'aimantation 115 est libre en rotation.

Ce bras 131 inclut une vis sans fin 132 en prise avec un écrou 133 attaché directement ou indirectement au deuxième carter du plot fixe, 100.

De plus, le deuxième moyen de déplacement 300 est pourvu d'un moyen d'entraînement dit deuxième moyen d'entraînement 135 pour mettre en rotation le bras 131 afin de générer sa translation.

Par exemple, le bras 131 s'étend longitudinalement d'une extrémité distale 131' portant une rotule 200 vers une extrémité proximale 131" munie d'une base crantée 131". Le deuxième moyen d'entraînement 135 inclut alors une crémaillère 140 mobile transversalement qui est en prise avec un cran 134 d'une périphérie de la base 131" du deuxième moyen de déplacement.

En référence à la figure 3, un ressort 142 peut être agencé entre le deuxième carter et la deuxième crémaillère 140. Ce ressort 142 tend à positionner la deuxième crémaillère 140 dans un deuxième emplacement POS112 visible sur la figure 3 qui entraîne le positionnement du deuxième moyen d'aimantation dans la position de désengagement de la figure 1.

En s'opposant à ce ressort 142, on déplace la deuxième crémaillère 140 selon la flèche F2 vers un premier emplacement POS111 engendrant le positionnement du deuxième moyen d'aimantation dans la position d'engagement.

Par ailleurs et en référence à la figure 2, l'ensemble de fixation peut comporter un système de tenue au crash 50.

Ce système de tenue au crash 50 inclut un lien de sécurité 51 qui est enroulé autour d'un enrouleur 55, par exemple autobloquant, du plot mobile 10. Le lien de sécurité s'étend alors d'un tronçon fixé à l'enrouleur vers un tronçon portant une broche à billes 53.

Cette broche à billes est insérable de manière réversible et manuelle dans un réceptacle 150 solidaire du deuxième carter 111 du plot fixe 100.

Plus précisément, le réceptacle 150 est traversé par un doigt 141 de la deuxième crémaillère 140 du plot fixe 100 en l'absence de la broche à billes 53. Le deuxième moyen d'aimantation 115 du plot fixe 100 est alors dans la position de désengagement POS2. La figure 3 montre un tel agencement du doigt 141 dans le réceptacle 150.

Par contre, lorsque la broche à billes 53 est logée dans le réceptacle 150, cette broche à billes 53 pousse la deuxième crémaillère selon la flèche F2. Le deuxième moyen d'aimantation 115 du plot fixe 100 est alors déplacé dans la position d'engagement.

Par suite, la broche à billes représente un moyen d'entraînement apte à mettre en mouvement la deuxième crémaillère.

Selon un premier mode de réalisation et en référence à la figure 2, l'enrouleur 55 est mobile en translation selon un premier axe longitudinal AX1 du plot mobile 10. Par exemple, cet enrouleur 55 est agencé à cet effet autour d'un moyen de guidage 14 du premier carter 11. L'enrouleur est alors mobile en translation mais aussi en rotation autour du premier axe longitudinal AX1 dans la première partie arrière 12 du premier carter 11.

Cet enrouleur 55 peut être plaqué par un organe ressort 60 contre le premier moyen de déplacement 30. L'organe ressort 60 peut être un ressort conique fixé à un fond 11' du premier carter qui est solidaire du panneau 2.

Par suite, l'enrouleur 55 peut comporte un plan incliné 56. En outre, le premier moyen de déplacement peut comporter une face inclinée 35 portée par la deuxième extrémité 34 de l'arbre longitudinal.

Dès lors, le plan incliné 56 peut être accolé par l'organe ressort 60 contre la face inclinée 35 du premier moyen de déplacement 30. Une translation du premier moyen de déplacement 30 le long d'une tige du premier carter engendre alors une translation de l'enrouleur 55.

De plus, le premier carter 11 peut comporter au moins un cran 65 en prise avec une face crantée 55' de l'enrouleur 55 dans la position d'engagement POS1. Dans cette position, chaque cran 65 du carter bloque en rotation l'enrouleur 55 selon un sens de rotation d'évidement S1 permettant l'évidement du lien de sécurité 51 hors de l'enrouleur.

Par contre, la translation de l'enrouleur vers la position de dégagement éloigne la face crantée 55' des crans du premier carter. Ainsi la face crantée de l'enrouleur représente la face de l'enrouleur en regard du premier moyen d'aimantation.

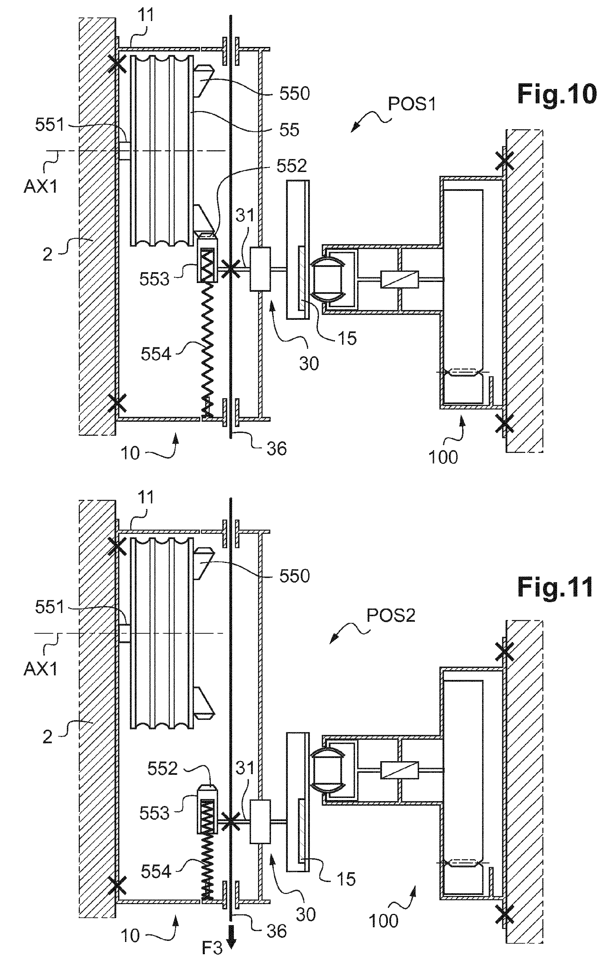

La figure 10 présente un deuxième mode de réalisation.

L'enrouleur 55 est fixé au premier carter 11 du plot mobile 10 par une articulation 551 conférant uniquement à cet enrouleur un degré de liberté en rotation par rapport au premier carter 11. L'enrouleur est alors mobile en rotation autour du premier axe longitudinal AX1 dans la première partie arrière 12 du premier carter 11.

Par exemple, l'enrouleur est agencé sur une tige 551 du plot mobile. Cette tige est sensiblement orthogonale au panneau 2.

De plus, l'enrouleur 55 comprend un anneau cranté 550.

Dès lors, le premier moyen de déplacement 30 du plot mobile comporte un cran 552. Ce cran 552 est accolé contre l'anneau cranté 550 pour immobiliser en rotation l'enrouleur lorsque le moyen d'aimantation est dans sa position d'engagement POS1.

Par exemple, ce cran 552 est ménagé sur un support 553 solidaire de l'arbre longitudinal 31.

En outre, un organe élastique 554 peut être interposé entre le premier moyen de déplacement 30 et le premier carter. Par exemple, l'organe élastique comporte un ressort logé partiellement dans le support 553.

Lorsqu'un opérateur manoeuvre le câble 36 et en référence à la figure 11, cet opérateur induit une translation du premier moyen de déplacement selon la flèche F3 en comprimant l'organe élastique 554.

L'enrouleur, l'arbre longitudinal et le premier moyen d'aimantation 15 sont chacun positionnés dans la position de désengagement POS2.

Dans cette position de désengagement POS2, l'enrouleur est libre en rotation.

Indépendamment de la réalisation et en référence à la figure 2, l'enrouleur 55 comporte éventuellement un ressort de rappel 70 tendant à engendrer une rotation de l'enrouleur selon un sens de rotation d'enroulement S2 pour enrouler le lien de sécurité 51 autour de cet enrouleur 55.

Par ailleurs, le dispositif de fixation 5 schématisé comporte au moins un organe en élastomère180 interposé directement ou indirectement entre le deuxième moyen d'aimantation 115 et un carter 111 de ce plot fixe 100.

Par exemple, le plot fixe comporte un premier organe en élastomère interposé indirectement entre la rotule 20 et le deuxième carter 111, en étant agencé entre l'écrou et le deuxième carter. Une rondelle 85 vissée permet de précontraindre l'organe en élastomère.

Le deuxième carter du plot fixe présente un accès à la rondelle 85. Par exemple, la partie avant 113 du deuxième carter est raccourcie, la rondelle saillant de cette partie avant pour être manipulée par un opérateur.

Le plot fixe peut comporter de manière alternative ou en complément un deuxième organe en élastomère 180 interposé directement entre la rotule 120 et le deuxième carter 11. Ce deuxième organe en élastomère 180 n'est toutefois pas solidaire de la deuxième roule 120 pour permettre le coulissement de cette deuxième rotule

Cet agencement n'est pas limitatif.

Les figures 2, 4 à 9 explicitent le fonctionnement du dispositif de fixation. Selon le premier mode de réalisation. Toutefois, le dispositif fonctionne de manière similaire selon le deuxième mode de réalisation.

En référence à la figure 2, avant la connexion du plot mobile 10 au plot fixe 100, le plot mobile se trouve sans sa position d'engagement POS1.

A l'inverse, le plot fixe se trouve sans sa position de désengagement POS2. Le deuxième bras, la deuxième rotule et le deuxième moyen d'aimantation sont chacun positionnés le plus prêt possible de la structure 3.

Un opérateur déplace alors les organes mobiles du plot mobile vers leur position de désengagement.

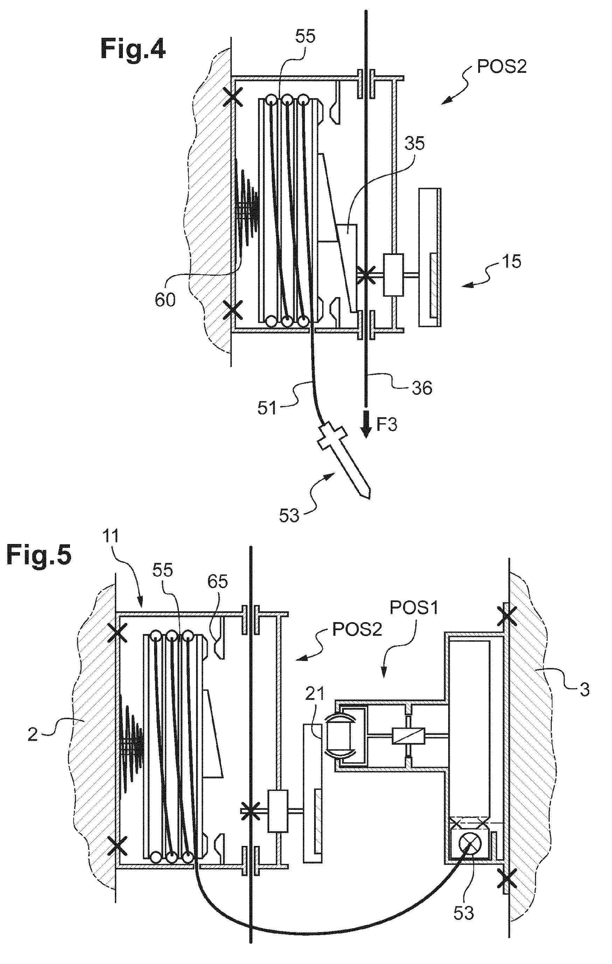

Selon la figure 4, l'opérateur manoeuvre le câble 36 ce qui induit une translation du premier moyen de déplacement selon la flèche F3.

La face inclinée 35 du premier moyen de déplacement exerce un effort sur l'enrouleur 55 permettant le déplacement longitudinale de cet enrouleur en compressant l'organe ressort 60.

L'enrouleur, l'arbre longitudinal et le premier moyen d'aimantation 15 sont chacun positionnés dans la position de désengagement POS2.

De même, les organes mobiles du plot fixe restent sont la position de désengagement.

Dès lors et en référence à la figure 5, l'opérateur pousse le panneau 2 pour le rapprocher de la structure 3.

L'opérateur saisit ensuite la broche à billes 53 pour l'insérer dans le réceptacle du plot fixe. L'enrouleur 55 n'étant pas bloqué par les crans 65 du premier carter, cet opérateur peut en effet dérouler le lien de sécurité pour manoeuvrer la broche à billes.

L'insertion de la broche à billes dans le réceptacle provoque le déplacement du bras, de la deuxième rotule et du deuxième moyen d'aimantation vers leur position d'engagement POS1 représentée sur la figure 5.

Par contre, le premier moyen d'aimantation reste dans sa position de désengagement POS2. Par conséquent, le deuxième moyen d'aimantation se trouve en vis-à-vis de la section plane 21 du berceau 20.

En relâchant le lien de sécurité, l'opérateur permet à l'organe ressort de mettre en rotation l'enrouleur pour rembobiner le lien de sécurité. Le plot mobile s'accole alors au plot fixe.

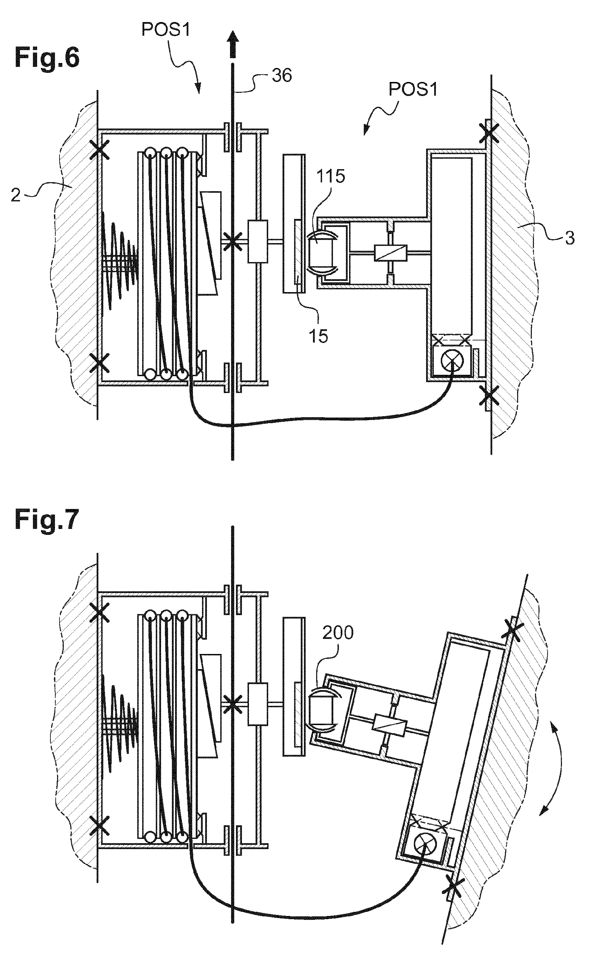

En référence à la figure 6, l'opérateur utilise ensuite ou parallèlement le moyen d'entraînement du plot mobile pour accoler le premier moyen d'aimantation 15 contre le deuxième moyen d'aimantation 115 du plot fixe.

Le plot mobile est alors aimanté au plot fixe ce qui permet de de fixer le panneau 2 à la structure 3.

Il est à noter que si la broche à billes n'est pas insérée dans le plot fixe, cette aimantation est de fait impossible. En effet, en l'absence de la broche à billes, les organes mobiles du plot fixe sont dans la position de désengagement. Cette caractéristique est intéressante d'un point de vue sécuritaire.

En référence à la figure 7, l'agencement d'un moyen d'aimantation sur une rotule 200 permet d'autoriser un décalage angulaire entre le panneau 2 et la structure 3.

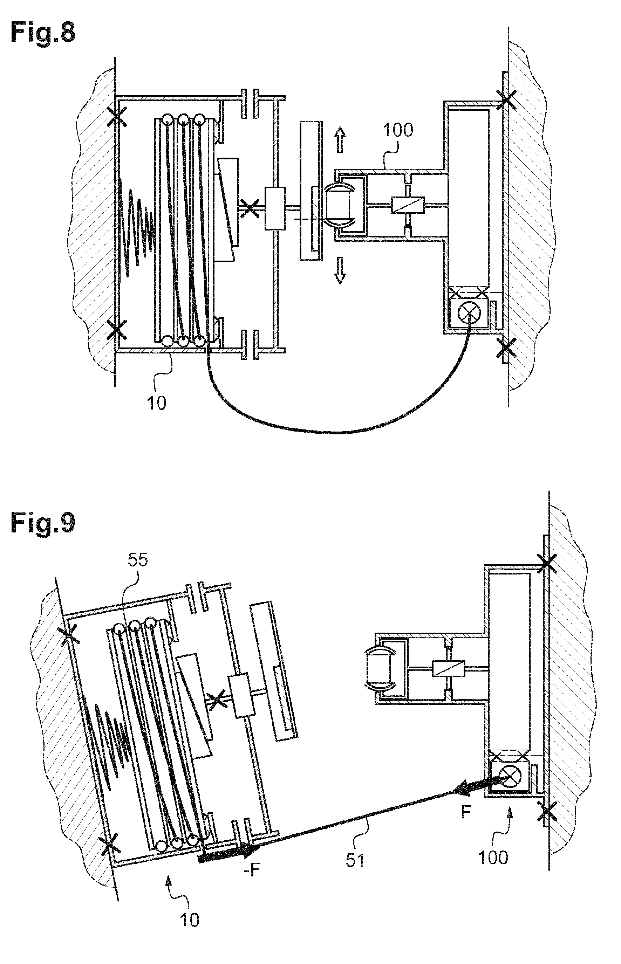

De même et en référence à la figure 8, cet agencement permet d'autoriser un décalage axial entre le panneau 2 et la structure 3.

En cas de crash par exemple et en référence à la figure 12, le pouvoir d'aimantation des moyens d'aimantation des plots mobile et fixe peut s'avérer insuffisant pour maintenir le panneau contre la structure 3.

Ce panneau pivote alors par rapport à la structure 3. Toutefois, l'enrouleur du plot mobile étant bloqué par le premier carter, ce mouvement rotatif est interrompu par le lien de sécurité 51.

En référence à la figure 9, Les efforts d'interface F exercés sur le dispositif de fixation sont calculables analytiquement, leurs directions et leurs valeurs étant connues.

La justification par calcul de la tenue de la fixation en cas de crash est alors facilitée.

## Revendications

1. Dispositif de fixation (5) pour fixer un panneau (2) à une structure (3), ce dispositif de fixation (5) étant muni d'au moins un ensemble de fixation (7) réversible comprenant un plot mobile (10) apte à être fixé au panneau (2) et un plot fixe (100) apte à être fixé à la structure (3), ledit plot mobile (10) comportant un premier moyen d'aimantation (15) coopérant avec un deuxième moyen d'aimantation (115) dudit plot fixe (100), au moins un desdits premier moyen d'aimantation (15) et deuxième moyen d'aimantation (115) comportant un aimant (16),
**caractérisé en ce qu'**un moyen d'aimantation (115) est porté par une rotule (200) du plot associé, chaque moyen d'aimantation (15, 115) étant relié à un moyen de déplacement (30, 300) qui translate de manière réversible ce moyen d'aimantation (15, 115) d'une position d'engagement (POS1) à une position de désengagement (POS2), un premier moyen de déplacement (30) du plot mobile translatant dans un plan le premier moyen d'aimantation (15) et un deuxième moyen de déplacement (300) du plot fixe (115) translatant le deuxième moyen d'aimantation le long d'un axe longitudinal (AX100) du plot fixe sensiblement orthogonal audit plan, le premier et le deuxième moyens d'aimantation (15, 155) étant fortement aimantés l'un à l'autre lorsqu'ils sont en vis-à-vis et chacun dans la position d'engagement (POS1) et n'étant pas aimantés ou faiblement aimantés lorsqu'au moins un moyen d'aimantation (15, 115) est dans sa position de désengagement (POS2).

2. Dispositif selon la revendication 1,
**caractérisé en ce que** le dispositif de fixation (5) comporte au moins une articulation à pivot (6) apte à être fixée au panneau (2) et à ladite structure (3) pour autoriser une rotation (ROT) du panneau (2) par rapport à la structure (3).

3. Dispositif selon l'une quelconque des revendications 1 à 2,
**caractérisé en ce que** soit chaque moyen d'aimantation (15, 115) comporte un aimant (16), soit un moyen d'aimantation (15) comporte un aimant (16) et l'autre moyen d'aimantation (115) comporte une plaque métallique (116).

4. Dispositif selon l'une quelconque des revendications 1 à 3,
**caractérisé en ce qu'**au moins un moyen d'aimantation (15) comportant une face dite « face de liaison (17) » à aimanter à l'autre moyen d'aimantation (115), ladite face de liaison (17) est recouverte d'un organe antifriction (18).

5. Dispositif selon l'une quelconque des revendications 1 à 4,
**caractérisé en ce que** le deuxième moyen de déplacement (300) est muni d'un bras (131), ledit bras (131) portant le deuxième moyen d'aimantation de ce plot et comprenant une vis sans fin (132) engagée dans un écrou (133) attaché à un carter du plot fixe (100), ledit deuxième moyen de déplacement (300) étant pourvu d'un moyen d'entraînement (135) pour mettre en rotation ledit bras (131) afin d'induire la translation de ce bras (131).

6. Dispositif selon la revendication 5,
**caractérisé en ce que** ledit bras (131) s'étend longitudinalement d'une extrémité (131') portant ledit deuxième moyen d'aimantation (20, 200) vers une extrémité (131 ") munie d'une base crantée, ledit moyen d'entraînement (135) comportant une crémaillère (140) mobile transversalement, une périphérie de ladite base (131 ") étant au moins partiellement crantée en comportant au moins un cran (134) en prise avec ladite crémaillère (140).

7. Dispositif selon la revendication 6,
**caractérisé en ce que** le premier moyen d'aimantation (15) du plot mobile (10) est porté par un berceau (20) non magnétique solidaire du premier moyen de déplacement (30), ledit berceau (20) étant mobile en translation selon une direction dans un plan.

8. Dispositif selon la revendication 7,
**caractérisé en ce que** ledit berceau (20) comporte une section plane (21) non magnétique suivie d'une section évidée (22) accueillant ledit premier moyen d'aimantation (15), ladite section plane (21) étant en vis-à-vis du deuxième moyen d'aimantation (115) dans la position de désengagement (POS2), ledit premier moyen d'aimantation (15) étant en vis à vis du deuxième moyen d'aimantation (115) dans la position d'engagement (POS1).

9. Dispositif selon la revendication 7,
**caractérisé en ce que** le premier moyen de déplacement (30) du plot mobile comporte un arbre longitudinal (31) portant un guide (32) perpendiculaire audit arbre longitudinal, ledit arbre longitudinal (31) étant solidaire dudit berceau (20) et d'un moyen d'entraînement (36) apte à requérir la translation dudit berceau (20), ledit guide (32) étant monté coulissant sur un carter (11) du plot mobile.

10. Dispositif selon la revendication 9,
**caractérisé en ce que** ledit moyen d'entraînement du plot mobile comporte un câble de commande (36).

11. Dispositif selon l'une quelconque des revendications 1 à 10,
**caractérisé en ce que** ledit dispositif de fixation (5) comporte un système de tenue au crash (50) muni d'un lien de sécurité (51) enroulé autour d'un enrouleur (55) autobloquant dudit plot mobile (10), ledit lien de sécurité (51) portant une broche à billes (53) insérable de manière réversible et manuelle dans un réceptacle (150) dudit plot fixe (100).

12. Dispositif selon la revendication 11,
**caractérisé en ce que** ledit enrouleur (55) est mobile en translation selon un axe longitudinal (AX1) du plot mobile (10) en étant agencé autour d'un moyen de guidage (14) d'un carter (11) dudit plot mobile (10), ledit enrouleur (55) étant accolé par un organe ressort (60) contre ledit premier moyen de déplacement (30)

13. Dispositif selon la revendication 11,
**caractérisé en ce que** ledit enrouleur (55) comporte un plan incliné (56) accolé par l'organe ressort (60) contre une face inclinée (35) du premier moyen de déplacement (30), une translation dudit premier moyen de déplacement (30) dans un plan engendrant une translation dudit enrouleur (55) selon un axe longitudinal perpendiculaire audit plan.

14. Dispositif selon la revendication 12,
**caractérisé en ce que** ledit carter (11) comporte au moins un cran (65) coopérant avec une face crantée (55') de l'enrouleur (55) pour empêcher une rotation de l'enrouleur (55) selon un sens de rotation d'évidement (S1) permettant l'évidement dudit lien de sécurité (51), lorsque le moyen d'aimantation est dans sa position d'engagement (POS1).

15. Dispositif selon la revendication 11,
**caractérisé en ce que** ledit enrouleur (55) est fixé au carter (11) du plot mobile (10) par une articulation (551) conférant à l'enrouleur un degré de liberté en rotation par rapport au carter du plot mobile, ledit enrouleur comprenant un anneau cranté (550), ledit premier moyen de déplacement (30) du plot mobile comporte un cran (552) bloquant ledit anneau cranté pour immobiliser en rotation l'enrouleur lorsque le moyen d'aimantation est dans sa position d'engagement (POS1).

16. Dispositif selon la revendication 15,
**caractérisé en ce que** ledit dispositif comporte un organe élastique (554) interposé entre le premier moyen de déplacement et le carter du plot fixe pour tendre à positionner ledit cran (552) contre ledit anneau cranté (550).

17. Dispositif selon l'une quelconque des revendications 11 à 16,
**caractérisé en ce que** ledit réceptacle (150) est traversé par un doigt (141) d'une crémaillère (140) en prise sur le deuxième moyen de déplacement (300) du plot fixe (100) en l'absence de la broche à billes (53), ledit moyen d'aimantation (115) du plot fixe (100) étant dans la position de désengagement (POS2) en l'absence de la broche à billes (53).

18. Dispositif selon l'une quelconque des revendications 11 à 17,
**caractérisé en ce que** ledit enrouleur (55) comporte un ressort de rappel (70) tendant à engendrer une rotation de l'enrouleur selon un sens de rotation d'enroulement (S2) pour enrouler ledit lien de sécurité (51) autour de l'enrouleur (55).

19. Dispositif selon l'une quelconque des revendications 1 à 18,
**caractérisé en ce que** le dispositif de fixation (5) comporte un organe en élastomère (180) interposé entre un moyen d'aimantation d'un plot (100) et un carter (111) de ce plot (100) soit entre une rotule et ledit carter soit indirectement en étant interposé entre le moyen de déplacement (300) et ledit carter (111).

20. Aéronef (1) muni d'une structure et d'au moins un panneau d'habillage,
**caractérisé en ce que** cet aéronef (1) comporte au moins un dispositif de fixation (5) selon l'une quelconque des revendications 1 à 19.

## Patentansprüche

1. Befestigungsvorrichtung (5) zum Befestigen einer Platte (2) an einer Struktur (3), wobei die Befestigungsvorrichtung (5) mit mindestens einer lösbaren Befestigungseinheit (7) versehen ist, die einen beweglichen Klotz (10) aufweist, der an der Platte (2) befestigt werden kann, und einen fest angebrachten Klotz (100), der auf der Struktur (3) befestigt werden kann, wobei der bewegliche Klotz (10) ein erstes Magnetisierungsmittel (15) aufweist, das mit einem zweiten Magnetisierungsmittel (115) des fest angebrachten Klotzes (100) zusammenwirkt, wobei mindestens eines des ersten Magnetisierungsmittels (15) und des zweiten Magnetisierungsmittels (115) einen Magneten (16) aufweist,
**dadurch gekennzeichnet, dass** ein Magnetisierungsmittel (115) von einem Kugelgelenk (200) des zugehörigen Klotzes getragen wird, wobei jedes Magnetisierungsmittel (15, 115) mit einem Bewegungsmittel (30, 300) verbunden ist, das das Magnetisierungsmittel (15, 115) umkehrbar aus einer Eingriffsstellung (POS 1) in eine Entkopplungsstellung (POS2) verschiebt, wobei ein erstes Bewegungsmittel (30) des beweglichen Klotzes das erste Magnetisierungsmittel (15) in eine Ebene verschiebt und ein zweites Bewegungsmittel (300) des fest angebrachten Klotzes (115) das zweite Magnetisierungsmittel entlang einer Längsachse (AX100) des fest angebrachten Klotzes verschiebt, die im Wesentlichen senkrecht zu der Ebene ist, wobei das erste und das zweite Magnetisierungsmittel (15, 155) zueinander stark magnetisiert sind, wenn sie sich gegenüberliegen und beide in Eingriffsstellung (POS 1) sind, und wobei diese nicht magnetisiert oder schwach magnetisiert sind, wenn mindestens eines der Magnetisierungsmittel (15, 115) sich in seiner Entkopplungsstellung (POS2) befindet.

2. Vorrichtung nach Anspruch 1,
**dadurch gekennzeichnet, dass** die Befestigungsvorrichtung (5) mindestens ein Schwenkgelenk (6) aufweist, das an der Platte (2) und an der Struktur (3) befestigt werden kann, um eine Drehung der Platte (2) relativ zu der Struktur (3) zu ermöglichen.

3. Vorrichtung nach einem der Ansprüche 1 bis 2,
**dadurch gekennzeichnet, dass** entweder jedes Magnetisierungsmittel (15, 115) einen Magneten (16) aufweist, oder ein Magnetisierungsmittel (15) einen Magneten (16) aufweist, und das andere Magnetisierungsmittel (115) eine Metallplatte (116) aufweist.

4. Vorrichtung nach einem der Ansprüche 1 bis 3,
**dadurch gekennzeichnet, dass** mindestens ein Magnetisierungsmittel (15) eine "Verbindungsfläche (17)" genannte Fläche aufweist zur Magnetisierung des anderen Magnetisierungsmittels (115), wobei die Verbindungsfläche (17) mit einem Gleitorgan (18) bedeckt ist.

5. Vorrichtung nach einem der Ansprüche 1 bis 4,
**dadurch gekennzeichnet, dass** das zweite Bewegungsmittel (300) mit einer Welle (131) versehen ist, wobei die Welle (131) das zweite Magnetisierungsmittel dieses Klotzes trägt und eine Endlosschraube (132) aufweist, die in eine Schraubenmutter (133) eingreift, die an einem Gehäuse des fest angebrachten Klotzes (100) befestigt ist, wobei das zweite Bewegungsmittel (300) mit einem Antriebsmittel (135) versehen ist, um die Welle (131) zu drehen, um die Translationsbewegung der Welle (131) auszulösen.

6. Vorrichtung nach Anspruch 5,
**dadurch gekennzeichnet, dass** die Welle (131) sich in Längsrichtung von einem Ende (131'), das das zweite Magnetisierungsmittel (20, 200) trägt, zu einem Ende (131") erstreckt, das mit einer Zahnbasis versehen ist, wobei das Antriebsmittel (135) ein in Querrichtung bewegliches Zahngestänge (140) aufweist, wobei ein Rand der Basis (131") mindestens teilweise gezahnt ist, indem er mindestens einen Zahn (134) aufweist, der in Eingriff mit dem Zahngestänge (140) steht.

7. Vorrichtung nach Anspruch 6,
**dadurch gekennzeichnet, dass** das erste Magnetisierungsmittel (15) des beweglichen Klotzes (10) von einem nicht-magnetischen Lager (20) getragen wird, das mit dem ersten Bewegungsmittel (30) fest verbunden ist, wobei das Lager (20) in einer Richtung in einer Ebene translationsbeweglich ist.

8. Vorrichtung nach Anspruch 7,
**dadurch gekennzeichnet, dass** das Lager (20) einen ebenen nicht-magnetischen Abschnitt (21) aufweist, gefolgt von einem ausgekehlten Abschnitt (22), der das erste Magnetisierungsmittel (15) aufnimmt, wobei der ebene Abschnitt (21) in der Entkopplungsstellung (POS2) dem zweiten Magnetisierungsmittel (115) gegenüberliegt, wobei das erste Magnetisierungsmittel (15) in der Eingriffsstellung (POS1) dem zweiten Magnetisierungsmittel (115) gegenüberliegt.

9. Vorrichtung nach Anspruch 7,
**dadurch gekennzeichnet, dass** das erste Bewegungsmittel (30) des beweglichen Klotzes eine Längswelle (31) aufweist, die ein Führungselement (32) trägt, welches senkrecht zu der Längswelle angeordnet ist, wobei die Längswelle (31) mit dem Lager (20) und einem Antriebsmittel (36) fest verbunden ist, welches die Translationsbewegung des Lagers (20) auslösen kann, wobei das Führungselement (32) gleitend auf einem Gehäuse (11) des beweglichen Klotzes montiert ist.

10. Vorrichtung nach Anspruch 9,
**dadurch gekennzeichnet, dass** das Antriebsmittel (35) des beweglichen Klotzes (10) ein Steuerkabel (36) aufweist.

11. Vorrichtung nach einem der Ansprüche 1 bis 10,
**dadurch gekennzeichnet, dass** die Befestigungsvorrichtung (5) ein Crash-Sicherheitssystem (50) aufweist, das mit einem Sicherheitsband (51) versehen ist, welches auf einem Aufroller (55) aufgerollt ist, der den beweglichen Klotz (10) selbstblockierend sperrt, wobei das Sicherheitsband (51) einen Kugelsperrbolzen (53) aufweist, der reversibel und manuell in das Gehäuse (150) des fest angebrachten Klotzes (100) einfügbar ist.

12. Vorrichtung nach Anspruch 11,
**dadurch gekennzeichnet, dass** der Aufroller (55) in Translationsrichtung entlang einer Längsachse (AX1) des beweglichen Klotzes (10) beweglich ist, indem er um ein Führungsmittel (14) eines Gehäuses (11) des beweglichen Klotzes (10) angeordnet ist, wobei der Aufroller (55) durch ein Federelement (60) gegen das Bewegungsmittel (30) angedrückt ist.

13. Vorrichtung nach Anspruch 11,
**dadurch gekennzeichnet, dass** der Aufroller (55) eine geneigte Fläche (56) aufweist, die von dem Federelement (60) gegen eine geneigte Fläche (35) des ersten Bewegungsmittels (30) gedrückt wird, wobei eine Translationsbewegung des ersten Bewegungsmittels (30) in einer Ebene eine Translationsbewegung des Aufrollers (55) entlang einer Längsachse, die senkrecht zu der Ebene verläuft, erzeugt.

14. Vorrichtung nach Anspruch 12,
**dadurch gekennzeichnet, dass** das Gehäuse (11) mindestens einen Zahn (65) aufweist, der mit einer gezahnten Fläche (55') des Aufrollers (55) zusammenwirkt, um eine Drehung des Aufrollers (55) in einer Abroll-Drehrichtung (S1) zu verhindern, die das Abrollen des Sicherheitsbandes (51) ermöglicht, wenn das Magnetisierungsmittel sich in seiner Eingriffsstellung (POS 1) befindet.

15. Vorrichtung nach Anspruch 11,
**dadurch gekennzeichnet, dass** der Aufroller (55) an dem Gehäuse (11) des beweglichen Klotzes (10) über ein Gelenk (551) befestigt ist, welches dem Aufroller einen Rotationsfreiheitsgrad relativ zu dem Gehäuse des beweglichen Klotzes verleiht, wobei der Aufroller einen Zahnkranz (550) aufweist, wobei das erste Bewegungsmittel (30) des beweglichen Klotzes einen Zahn (552) aufweist, der den Zahnkranz blockiert, um eine Drehung des Aufrollers zu blockieren, wenn das Magnetisierungsmittel sich in seiner Eingriffsstellung (POS1) befindet.

16. Vorrichtung nach Anspruch 15,
**dadurch gekennzeichnet, dass** die Vorrichtung ein elastisches Element (554) aufweist, das zwischen dem ersten Bewegungsmittel und dem Gehäuse des fest angebrachten Klotzes angeordnet ist, um den Zahn (552) in Eingriff mit dem Zahnkranz (550) zu bringen.

17. Vorrichtung nach einem der Ansprüche 11 bis 16,
**dadurch gekennzeichnet, dass** das Gehäuse (150) von einem Finger (141) eines Zahngestänges (140) durchquert wird, der mit dem Bewegungsmittel (300) des fest angebrachten Klotzes (100) in Abwesenheit des Kugelsperrbolzens (53) in Eingriff steht, wobei das Magnetisierungsmittel (115) des fest angebrachten Klotzes (100) sich in Abwesenheit des Kugelsperrbolzens (53) in der ausgerückten Stellung (POS2) befindet.

18. Vorrichtung nach einem der Ansprüche 11 bis 17,
**dadurch gekennzeichnet, dass** der Aufroller (55) eine Rückholfeder (70) aufweist, die eine Drehung des Aufrollers in einer Aufrollrichtung (S2) erzeugt, um das Sicherheitsband (51) auf dem Aufroller (55) aufzurollen.

19. Vorrichtung nach einem der Ansprüche 1 bis 18,
**dadurch gekennzeichnet, dass** die Befestigungsvorrichtung (5) ein Element aus einem Elastomer (180) aufweist, das zwischen dem Magnetisierungsmittel eines Klotzes (100) und einem Gehäuse (111) dieses Klotzes (100) angeordnet ist, entweder zwischen einem Kugelgelenk und dem Gehäuse oder indirekt zwischen dem Bewegungsmittel (300) und dem Gehäuse (111).

20. Luftfahrzeug (1) mit einer Struktur und mindestens einer Verkleidungsplatte,
**dadurch gekennzeichnet, dass** dieses Luftfahrzeug (1) mindestens eine Befestigungsvorrichtung (5) nach einem der Ansprüche 1 bis 19 aufweist.

## Claims

1. Fastening device (5) for fastening a panel (2) to a structure (3), the fastening device (5) being provided with at least one reversible fastening assembly (7) comprising a movable stud (10) suitable for being fastened to the panel (2) and a stationary stud (100) suitable for being fastened to the structure (3), said movable stud (10) comprising a first magnetization means (15) cooperating with a second magnetization means (115) of said stationary stud (100), at least one of said first magnetization means (15) and second magnetization means (115) comprising a magnet (16),
**characterized in that** a magnetization means (115) is carried by a ball joint (200) of the associated stud, each magnetization means (15, 115) being connected to a movement means (30, 300) which reversibly translates the magnetization means (15, 115) from an engagement position (POS1) to a disengagement position (POS2), a first movement means (30) of the movable stud translating in a plane the first magnetization means (15) and a second movement means (300) of the stationary stud (115) translating the second magnetization means along a longitudinal axis (AX100) of the stationary stud substantially orthogonal to said plane, the first and the second magnetization means (15, 155) being strongly magnetized to each other when they are facing and each is in the engagement position (POS1), and being not magnetized or weakly magnetized when at least one magnetization means (15, 115) is in its disengagement position (POS2).

2. Device according to claim 1,
**characterized in that** the fastening device (5) comprises at least one pivot joint (6) suitable for being fastened to the panel (2) and to said structure (3) in order to allow a rotation (ROT) of the panel (2) relative to the structure (3).

3. Device according to any one of claims 1 to 2,
**characterized in that** either each magnetization means (15, 115) comprises a magnet (16), or one magnetization means (15) comprises a magnet (16) and the other magnetization means (115) comprises a metal plate (116).

4. Device according to any one of claims 1 to 3,
**characterized in that** at least one magnetization means (15) comprising a face referred to as a "connection face (17)" to be magnetized to the other magnetization means (115), said connection face (17) is covered by an antifriction member (18).

5. Device according to any one of claims 1 to 4,
**characterized in that** the second movement means (300) is provided with an arm (131), said arm (131) carrying the second magnetization means of the stud and comprising a worm (132) engaged in a nut (133) attached to a casing of the fixed stud (100), said second movement means (300) being provided with a drive means (135) for driving said arm (131) in rotation so as to induce the translation of the arm (131).

6. Device according to claim 5,
**characterized in that** said arm (131) extends longitudinally from an end (131') carrying said second magnetization means (20, 200) towards an end (131") provided with a notched base, said drive means (135) comprising a transversely movable rack (140), a periphery of said base (131") being at least partly notched, comprising at least one notch (134) engaged with said rack (140).

7. Device according to claim 6,
**characterized in that** the first magnetization means (15) of the movable stud (10) is carried by a nonmagnetic cradle (20) secured to the first movement means (30), said cradle (20) being movable in translation along a direction in a plane.

8. Device according to claim 7,
**characterized in that** said cradle (20) comprises a nonmagnetic plane section (21) followed by a hollowed-out section (22) accommodating said first magnetization means (15), said plane section (21) facing the second magnetization means (115) in the disengagement position (POS2), said first magnetization means (15) facing the second magnetization means (115) in the engagement position (POS1).

9. Device according to claim 7,
**characterized in that** the first movement means (30) of the movable stud comprises a longitudinal shaft (31) carrying a guide (32) perpendicular to said longitudinal shaft, said longitudinal shaft (31) being secured to said cradle (20) and to a drive means (36) suitable for bringing about the translation of said cradle (20), said guide (32) being mounted to slide on a casing (11) of the movable stud.

10. Device according to claim 9,
**characterized in that** said drive means of the movable stud comprises a control cable (36).

11. Device according to any one of claims 1 to 10,
**characterized in that** said fastening device (5) comprises a crash-resistant system (50) provided with a safety line (51) wound around an automatically-locking winder (55) of said movable stud (10), said safety line (51) carrying a ball pin (53) reversibly and manually insertable into a receptacle (150) of said stationary stud (100).

12. Device according to claim 11,
**characterized in that** said winder (55) is movable in translation along a longitudinal axis (AX1) of the movable stud (10) while being arranged around a guide means (14) of a casing (11) of said movable stud (10), said winder (55) being pressed by a spring member (60) against said first movement means (30).

13. Device according to claim 11,
**characterized in that** said winder (55) comprises an inclined plane (56) pressed by the spring member (60) against an inclined face (35) of the first movement means (30), a translation of said first movement means (30) in a plane giving rise to a translation of said winder (55) along a longitudinal axis perpendicular to said plane.

14. Device according to claim 12,
**characterized in that** said casing (11) comprises at least one notch (65) cooperating with a notched face (55') of the winder (55) in order to prevent a rotation of the winder (55) in an unwinding direction of rotation (S1) making it possible to unwind said safety line (51), when the magnetization means is in its engagement position (POS1).

15. Device according to claim 11,
**characterized in that** said winder (55) is fastened to the casing (11) of the movable stud (10) by an articulation (551) providing the winder with a degree of freedom in rotation relative to the casing of the movable stud, said winder comprising a notched ring (550), said first movement means (30) of the movable stud comprises a notch (552) blocking said notched ring in order to immobilize in rotation the winder when the magnetization means is in its engagement position (POS1).

16. Device according to claim 15,
**characterized in that** said device comprises an elastic member (554) interposed between the first movement means and the casing of the stationary stud in order to tend to position said notch (552) against said notched ring (550).

17. Device according to any one of claims 11 to 16,
**characterized in that** said receptacle (150) is traversed by a finger (141) of a rack (140) engaged on the second movement means (300) of the stationary stud (100) in the absence of the ball pin (53), said magnetization means (115) of the stationary stud (100) being in the disengagement position (POS2) in the absence of the ball pin (53).

18. Device according to any one of claims 11 to 17,
**characterized in that** said winder (55) comprises a return spring (70) tending to generate a rotation of the winder in a winding direction of rotation (S2) in order to wind said safety line (51) around the winder (55).

19. Device according to any one of claims 1 to 18,
**characterized in that** the fastening device (5) comprises a member (180) made from elastomer interposed between a magnetization means of a stud (100) and a casing (111) of the stud (100), either between a ball joint and said casing or indirectly by being interposed between the movement means (300) and said casing (111).

20. Aircraft (1) provided with a structure and with at least one trim panel,
**characterized in that** the aircraft (1) comprises at least one fastening device (5) according to any one of claims 1 to 19.
